(19) Europäisches Patentamt

European Patent Office

Office européen des brevets

(11) **EP 1 482 468 A2**

(12) **EUROPEAN PATENT APPLICATION**

(43) Date of publication:
**01.12.2004 Bulletin 2004/49**

(51) Int Cl.$^7$: **G08C 17/02**

(21) Application number: **04011656.8**

(22) Date of filing: **17.05.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventor: **Lee, Joo-Shik**<br>**Gyeonggi-Do (KR)** |
| (30) Priority: **26.05.2003 KR 2003033479** | (74) Representative: **von Hellfeld, Axel, Dr. Dipl.-Phys.**<br>**Wuesthoff & Wuesthoff**<br>**Patent- und Rechtsanwälte**<br>**Schweigerstrasse 2**<br>**81541 München (DE)** |
| (71) Applicant: **LG Electronics Inc.**<br>**Seoul (KR)** | |

(54) **Method and device for searching distributed signal sources of base station**

(57)     The present invention discloses a method and device for searching distributed signal sources of a base station which include a pair of circular array antennas maintaining a predetermined distance from each other in the up/down direction, estimate primary central vertical angles of the distributed signal sources received by each sensor of the pair of circular array antennas according to the TLS-ESPRIT, convert a 2-dimensional cost function into a first 1-dimensional cost function by using the estimated primary central vertical angles of the distributed signal sources, estimate central horizontal angles which are solutions making the first 1-dimensional cost function have a maximum, convert the 2-dimensional cost function into a second 1-dimensional cost function by using the estimated central horizontal angles of the distributed signal sources, and estimate the central vertical angles which are solutions making the second 1-dimensional function have a maximum.

FIG. 4

EP 1 482 468 A2

## Description

### BACKGROUND OF THE INVENTION

#### 1. Field of the Invention

The present invention relates to searching for signal sources of a mobile communication base station, and more particularly to, a method and device for searching distributed signal sources of a base station having adaptive antennas.

#### 2. Description of the Related Art

In a mobile communication system, radio signals are transmitted through a multiple path, and thus become distributed signal sources.

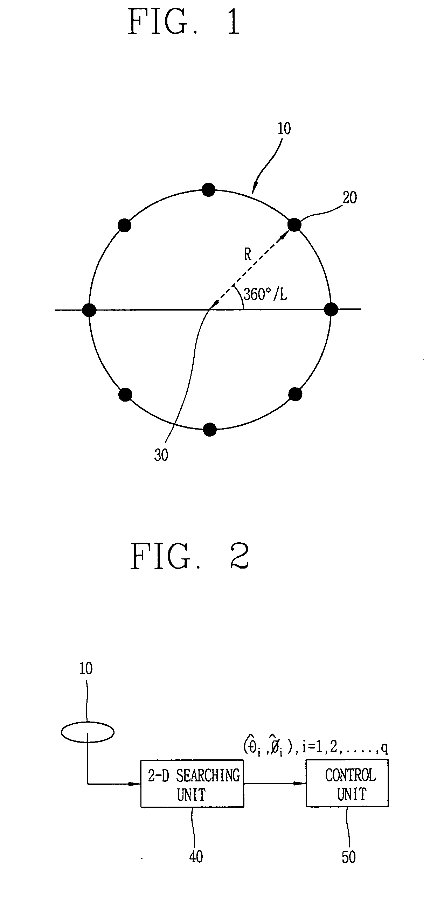

A base station generally estimates signal arrival directions of the distributed signal sources, namely a direction of a mobile communication terminal by using a circular array antenna of Fig. 1. In the circular array antenna 10, a plurality of sensors 20 are arranged on the circumference of a radius R from an axis 30 at a predetermined interval.

Each of the sensors 20 of the circular array antenna 10 individually performs an antenna function. When each sensor 20 receives signals from one signal source, the signals received by the sensors 20 have phase differences. The base station estimates optimum signal arrival directions and forms beams in the estimated directions, by compensating for or correcting the phase differences of the received signals of the sensors 20.

Fig. 2 is a structure diagram illustrating a conventional device for searching signal sources of a base station using the circular array antenna 10.

The conventional device for searching the signal sources of the base station includes a 2-D searching unit 40 for simultaneously estimating central vertical angles and central horizontal angles of distributed signal sources from the circular array antenna 10 by using a 2-D cost function (2-dimensional cost function), and a control unit 50 for forming beams in signal arrival directions of the distributed signal sources by using the central vertical angles and the central horizontal angles estimated in the 2-D searching unit 40.

When estimating the signal arrival directions of the distributed signal sources by using one circular array antenna 10, the base station uses the 2-D cost function (or 2-dimensional decision function) such as the following formula 1 having the central vertical angles and the central horizontal angles as parameters:

Formula 1

$$V(\theta,\phi) = \frac{1}{1 - \hat{\lambda}_{max}(\theta,\phi)}$$

Here, $\hat{\lambda}_{max}(\theta,\phi)$ is the maximum eigenvalue of the matrix $T(\theta, \phi) = \hat{E}_s^H \psi(\theta,\phi)\hat{E}_s^* \hat{E}_s^T \psi^*(\theta,\phi) \hat{E}_s$, $\hat{E}_s$ is a signal eigenvector matrix, $\psi(\theta,\phi)$ which is L×L is a diagonal matrix satisfying $\psi(\theta,\theta)=diag(e^{j2\eta sin\theta cos(\phi-\gamma_1)}, \cdots, e^{j2\eta sin \theta cos(\phi-\gamma_L)}, \eta$ is a constant number relating to the radius R of the circular array antenna and the distance between the sensors 10, $\gamma_k$ is $\frac{2\pi (k-1)}{L}$, and L is a number of the sensors 20.

The 2-D cost function has been described in detail in Q.Wan and Y-N.Peng, "Low-complexity estimator for four-dimensional parameters under a reparameterized distributed source model," IEEE Proc.-Radar, Sonar, Navig., vol.148, pp.313-317, December 2001, and thus detailed explanations thereof are omitted.

The distributed signal sources received through the sensors 20 of the circular array antenna 10 are transmitted to the 2-D searching unit 40. The 2-D searching unit 40 sets an initial value according to the Newton's method (S10), and simultaneously estimates values of arguments making the 2-D cost function have a maximum as shown in the following formula 2, namely optimum central vertical angles and central horizontal angles of the distributed signal sources on the basis of the set initial value:

Formula 2

$$(\hat{\theta},\hat{\phi}) = \arg\max_{\theta,\phi} V(\theta,\phi)$$

When the estimated central vertical angles and central horizontal angles of the distributed signal sources are solutions making the 2-D cost function have a global maximum, not a local maximum, the control unit 50 controls formation of antenna beams in the directions of the estimated central vertical angles and central horizontal angles, namely in the signal arrival directions of the corresponding distributed signal sources.

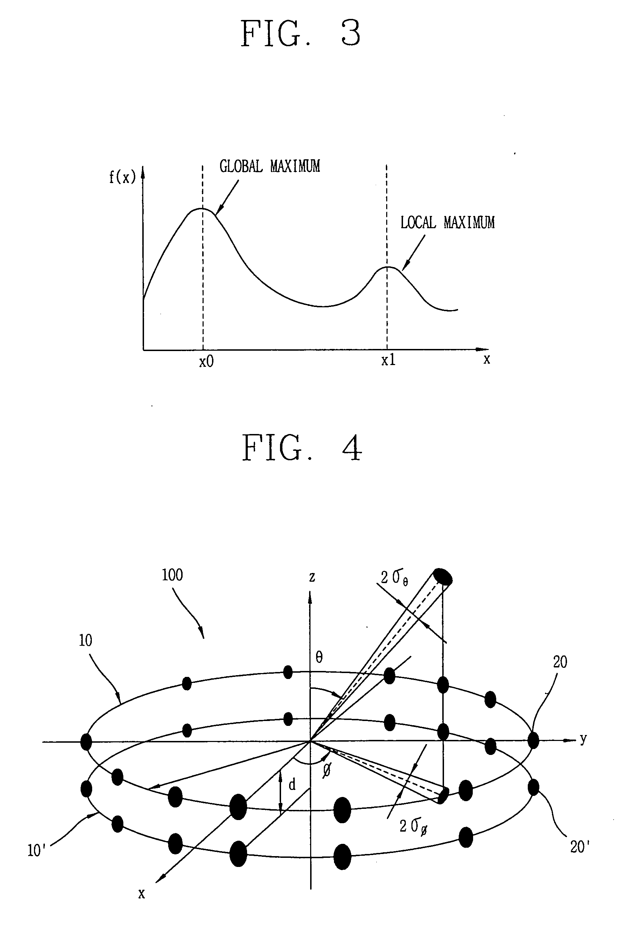

The Newton's method is a general method for calculating a solution of a nonlinear multidimensional function. It is difficult to obtain the solution of the nonlinear multidimensional function at a time. The initial value set according to the Newton's method may be an approximate value of the solution (x0 of Fig. 3) making the 2-D cost function have a global maximum, but more possibly is an approximate value of the solution (x1 of Fig. 3) making the 2-D cost function have a local maximum.

Accordingly, the conventional device for searching the distributed signal sources of the base station which calculates the 2-D cost function by using the distributed signal sources from one circular array antenna sets the initial value according to the Newton's method, and obtains the solution making the 2-D cost function have the local maximum on the basis of the set initial value. It is thus impossible to estimate the optimum signal arrival directions of the distributed signal sources.

In addition, the conventional device for searching the distributed signal sources of the base station must simultaneously estimate the central vertical angles and the central horizontal angles when the nonlinear 2-D cost function has the maximum (or minimum), and also estimate the optimum central vertical angles and central horizontal angles, avoiding local maximum problems of the nonlinear 2-D function for the whole distributed signal sources, thereby requiring much calculation to estimate the signal arrival directions of the distributed signal sources. As a result, the conventional device for searching the distributed signal sources of the base station seriously generates loads on the beam formation system using one circular array antenna (or adaptive antenna).

SUMMARY OF THE INVENTION

Therefore, an object of the present invention is to provide a method and device for searching distributed signal sources of a base station which can reduce complexity of a method for estimating signal arrival directions of the distributed signal sources and prevent local maximum problems, by estimating primary central vertical angles of the distributed signal sources by using a pair of circular array antennas, estimating central horizontal angles of the distributed signal sources by applying the estimated primary central vertical angles to a 2-D cost function, and estimating central vertical angles of the distributed signal sources by applying the estimated central horizontal angles to the 2-D cost function.

To achieve these and other advantages and in accordance with the purpose of the present invention, as embodied and broadly described herein, there is provided a device for searching distributed signal sources of a base station, including: a pair of circular array antennas maintaining a predetermined distance from each other in the up/down direction; a preprocessing unit for estimating primary central vertical angle of the distributed signal source from the pair of circular array antennas; a central horizontal angle searching unit for estimating central horizontal angle of the distributed signal source by using the primary central vertical angle; and a central vertical angle searching unit for estimating central vertical angle of the distributed signal source by using the estimated central horizontal angle.

According to one aspect of the invention, a method for searching distributed signal sources of a base station includes the steps of: receiving the distributed signal sources through each sensor of a pair of circular array antennas; estimating primary central vertical angles of the received distributed signal sources; estimating a central horizontal angle of one distributed signal source by using the primary central vertical angle of the distributed signal source; and estimating a central vertical angle of the distributed signal source by using the estimated central horizontal angle.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Fig. 1 is a structure diagram illustrating a general circular array antenna of a base station;
Fig. 2 is a structure diagram illustrating a conventional device for searching signal sources of a base station by using the general circular array antenna;
Fig. 3 is a graph showing examples of a global maximum and a local maximum;
Fig. 4 is a structure diagram illustrating a pair of circular array antennas in accordance with the present invention;
Fig. 5 is a structure diagram illustrating a device for searching distributed signal sources of a base station in accordance with the present invention; and
Fig. 6 is a flowchart showing sequential steps of a method for searching distributed signal sources of a base station in accordance with the present invention.

DETAILED DESCRIPTION OF THE PREFERRED EMBODIMENTS

Reference will now be made in detail to the preferred embodiments of the present invention, examples of which are illustrated in the accompanying drawings.

The present invention employs a pair of circular array antennas.

Fig. 4 is a structure diagram illustrating the pair of circular array antennas in accordance with the present invention.

Referring to Fig. 4, in the pair of circular array antennas 100, a first circular array antenna 10 and a second circular array antenna 10' are disposed in the upper and lower sides, having their axes on the identical line. Sensors 20 of the first circular array antenna 10 and sensors 20' of the second circular array antenna 10' maintain a distance d, respectively. The distance d is a multiple of a wavelength $\lambda$, for example, $\lambda/2$ or $\lambda$.

Each of the distributed signal sources received by the pair of circular array antennas 100 has a central vertical angle $\theta$, vertical angle distribution $\sigma_\theta$, central horizontal angle $\phi$ and horizontal angle distribution $\sigma_\phi$. Here, the primary object of the present invention is to estimate signal arrival directions of the distributed signal sources, and thus estimation of the vertical angle distribution $\sigma_\theta$ and horizontal angle distribution $\sigma_\phi$ is omitted.

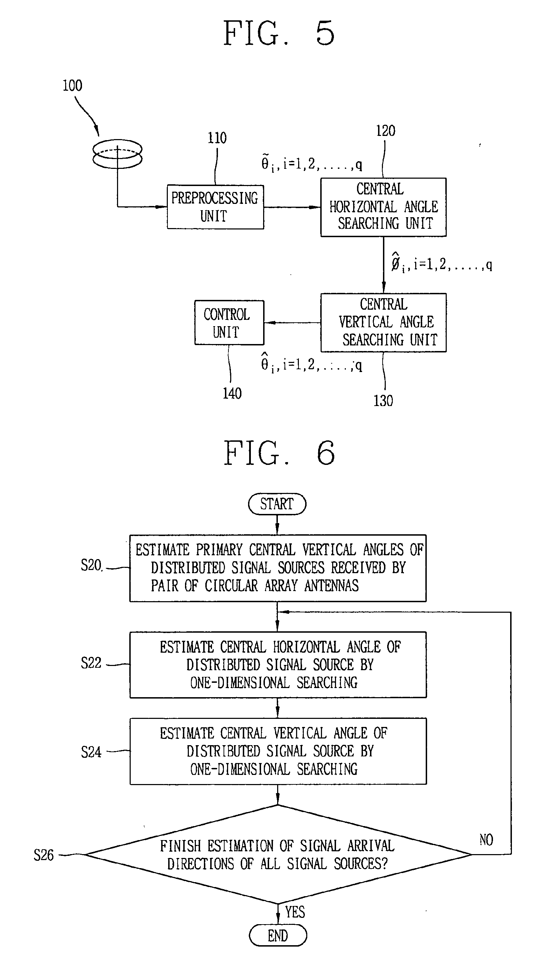

Fig. 5 is a structure diagram illustrating a device for searching distributed signal sources of a base station in accordance with the present invention.

As illustrated in Fig. 5, the device for searching the distributed signal sources of the base station includes a pair of circular array antennas 100 maintaining a predetermined distance between first and second circular array antennas 10 and 10', a preprocessing unit 110 for estimating primary central vertical angles of the distributed signal sources from the pair of circular array antennas 100, a central horizontal angle searching unit 120 for generating an 1-D cost function by applying the estimated primary central vertical angles to a 2-D cost function, and estimating central horizontal angles of the distributed signal sources by using the 1-D cost function, a central vertical angle searching unit 130 for generating an 1-D cost function by applying the estimated central horizontal angles to the 2-D cost function, and estimating central vertical angles of the distributed signal sources by using the 1-D cost function, and a control unit 140 for forming beam in signal arrival direction of each distributed signal source by using the estimated central vertical angles and central horizontal angles.

When estimating the primary central vertical angles of the distributed signal sources, the preprocessing unit 110 can employ an MUSIC method, a maximum likelihood (ML) method, or total least square-estimation of signal parameter via rotational invariance techniques (TLS-ESPRIT). The MUSIC method estimates signal arrival directions satisfying orthogonality in a spectral-based point, by using orthogonality between noise-related eigenvectors obtained by intrinsically separating a covariance matrix and control vectors for the real signal arrival directions. The ML method finds out variables for minimizing differences between a covariance matrix estimated by a parametric model and a theoretical covariance matrix including unknown variables. The TLS-ESPRIT simply estimates signal arrival directions by using the structural characteristics of an antenna in a dot signal source model. The general TLS-ESPRIT has been described in detail in R.Roy and T. Kailath, "ESPRIT-Estimation of signal parameters via rotational invariance techniques", IEEE Trans. Acoust., Speech, Signal Process., vol.37, pp.984-995, July 1989.

In accordance with the present invention, the distributed signal sources are received through the pair of circular array antennas 100 maintaining a predetermined distance from each other. Therefore, the TLS-ESPRIT used in the preprocessing unit 110 obtains some relation between the control vectors of the pair of circular array antennas 100, displays some relation as a matrix, and primarily estimates central vertical angles of the distributed signal sources from the relation between the eigenvectors of the matrix and the covariance matrix.

The ML method can most precisely estimate the signal arrival directions. However, because the ML method estimates the signal arrival directions by using a nonlinear multidirectional function, the ML method is very complicated, and requires much time to process the corresponding signals. Accordingly, the present invention uses the TLS-ESPRIT to estimate the primary central vertical angles of the distributed signal sources.

The operation of the device for searching the distributed signal sources of the base station in accordance with the present invention will now be described.

Fig. 6 is a flowchart showing sequential steps of a method for searching distributed signal sources of a base station in accordance with the present invention.

When the pair of circular array antennas 100 maintaining a predetermined distance d from each other in the up/down direction receive the distributed signal sources, the preprocessing unit 110 estimates the primary central vertical angles $\tilde{\theta}$ of the distributed signal sources received by each sensor 20 and 20' of the pair of circular array antennas 100 according to the TLS-ESPRIT by using incident angles and phase differences of the distributed signal sources. The primary central vertical angles $\tilde{\theta}$ do not indicate solutions making the 2-D cost function have a global maximum but approximate values of the solutions. The preprocessing unit 110 estimates the primary central vertical angles $\tilde{\theta}$ of the whole distributed signal sources received by the pair of circular array antennas 100 (for example, q distributed signal sources when a number of the distributed signal sources is q) (S20).

The central horizontal angle searching unit 120 inputs the primary central vertical angle $\tilde{\theta}_i$ to the formula for solving 2-dimensional optimization problems as shown in formula 2 as central vertical angle variable $\theta_i$, and thus converts the 2-D cost function into an 1-D cost function for central horizontal angle variable $\phi_i$, as represented by following formula 3:

## Formula 3

$$\hat{\phi}_i = \arg\max_\phi V(\widetilde{\theta}_i, \phi_i)$$

Here, $\theta_i$ denotes the central vertical angle variable of the i-th distributed signal source, and $\phi_i$ denotes the central horizontal angle variable of the i-th distributed signal source.

The central horizontal angle searching unit 120 estimates the solution making the 1-D function have the global maximum, namely the central horizontal angle $\phi_i$ of the i-th distributed signal source (S22). The method for obtaining the solution of the 1-D function is much easier in calculation than the method for obtaining the solution of the nonlinear 2-D function, and does not obtain the solution having the local maximum.

The central vertical angle searching unit 130 inputs the estimated central horizontal angle $\phi_i$ of the i-th distributed signal source to the formula for solving 2-D optimization problems as shown in formula 2 as central horizontal angle variable $\phi_i$, and thus converts the 2-D cost function into an 1-D function for central vertical angle variable $\theta_i$, as represented by following formula 4:

## Formula 4

$$\hat{\theta}_i = \arg\max_{\theta} V(\theta_i, \hat{\phi}_i)$$

Thereafter, the central vertical angle searching unit 130 estimates the solution making the 1-D function have the global maximum, namely the central horizontal angle $\theta_i$ of the i-th distributed signal source (S24).

The central horizontal angle searching unit 120 and the central vertical angle searching unit 130 confirm whether the central vertical angles and the central horizontal angles for q distributed signal sources have been all estimated. The central horizontal angle searching unit 120 and the central vertical angle searching unit 130 sequentially perform estimation of the central horizontal angle using the primary central vertical angle, and estimation of the central vertical angle using the estimated central horizontal angle, until the central vertical angles and the central horizontal angles for q distributed signal sources have been all estimated (S26).

When the central vertical angles and the central horizontal angles for q distributed signal sources have been all estimated, the control unit 140 controls beam formation in the signal arrival direction of each distributed signal source.

As discussed earlier, in accordance with the present invention, the method and device for searching the distributed signal sources of the base station simplify primary estimation calculation and prevent local maximum problems, by primarily estimating the central vertical angles of the distributed signal sources received by the pair of circular array antennas according to the TLS-ESPRIT.

In addition, the method and device for searching the distributed signal sources of the base station perform 1-D searching (1-dimensional searching) by 2q times when q distributed signal sources exist, by estimating the primary central vertical angles of the distributed signal sources, and sequentially performing estimation of the central horizontal angles of the distributed signal sources using the primary central vertical angles and estimation of the central vertical angles of the distributed signal sources using the estimated central horizontal angles on each distributed signal source.

Furthermore, the method and device for searching the distributed signal sources of the base station estimate the primary central vertical angles of the distributed signal sources, convert the 2-D cost function into the 1-D cost function for the central horizontal angle variables by inputting the primary central vertical angles of the distributed signal sources to the 2-D cost function, calculate the solutions making the 1-D cost function have the maximum, namely the central horizontal angles, convert the 2-D cost function into the 1-D cost function for the central vertical angle variables by inputting the calculated central horizontal angles to the 2-D cost function, and calculate the solutions making the 1-D cost function have the maximum, namely the central vertical angles. Calculation of the 1-D function is easier than that of the nonlinear 2-D function. As a result, complexity of calculation for estimating the signal arrival directions of the distributed signal sources can be reduced, and loads of the base station for estimating the signal arrival directions of the distributed signal sources can also be reduced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

**Claims**

1. A device for searching distributed signal sources of a base station, comprising:

a pair of circular array antennas maintaining a predetermined distance from each other in the up/down direction;
a preprocessing unit for estimating primary central vertical angle of the distributed signal source from the pair of circular array antennas;
a central horizontal angle searching unit for estimating central horizontal angle of the distributed signal source by using the primary central vertical angle; and
a central vertical angle searching unit for estimating central vertical angle of the distributed signal source by using the estimated central horizontal angle.

2. The device of claim 1, wherein two axes of the pair of circular array antennas are disposed on the same line with the predetermined distance from each other, and sensors of the pair of circular array antennas maintain an up/down distance corresponding to the predetermined distance from each other.

3. The device of claim 2, wherein the predetermined distance comprises a multiple of a wavelength.

4. The device of claim 1, wherein the preprocessing unit estimates the primary central vertical angle of the distributed signal source received by the pair of circular array antennas according to a TLS-ESPRIT.

5. The device of claim 1, wherein the central horizontal angle searching unit generates a first 1-dimensional cost function for a central horizontal angle variable, by inputting the primary central vertical angle as a value of a central vertical angle variable into a 2-dimensional cost function for the central vertical angle variable and the central horizontal angle variable, and estimates the central horizontal angle of the distributed signal source making the first 1-dimensional cost function have a maximum.

6. The device of claim 1, wherein the central vertical angle searching unit generates a second 1-dimensional cost function for central vertical angle variable, by inputting the estimated central horizontal angle as a value of a central horizontal angle variable into a 2-dimensional cost function for the central vertical angle variable and the central horizontal angle variable, and estimates the central vertical angle of the distributed signal source making the second 1-dimensional cost function have a maximum.

7. The device of claim 1, further comprising a control unit for forming beam in signal arrival direction of the distributed signal source, by using the estimated central vertical angle and central horizontal angle.

8. A method for searching distributed signal sources of a base station, comprising the steps of:

receiving the distributed signal sources through each sensor of a pair of circular array antennas;
estimating primary central vertical angles of the received distributed signal sources;
estimating a central horizontal angle of one distributed signal source by using the primary central vertical angle of the distributed signal source; and
estimating a central vertical angle of the distributed signal source by using the estimated central horizontal angle.

9. The method of claim 8, further comprising a step for sequentially performing the step for estimating the central horizontal angle and the step for estimating the central vertical angle as many as the distributed signal sources.

10. The method of claim 8, wherein two axes of the pair of circular array antennas are disposed on the same line with a predetermined distance corresponding to a multiple of a wavelength from each other, and sensors of the pair of circular array antennas maintain an up/down distance corresponding to the predetermined distance from each other.

11. The method of claim 8, wherein the step for estimating the primary central vertical angles estimates the primary central vertical angles of the distributed signal sources received by each sensor of the pair of circular array antennas according to a TLS-ESPRIT.

12. The method of claim 8, wherein the step for estimating the central horizontal angle of the distributed signal source comprises the steps of:

converting a 2-dimensional cost function for central vertical angle variables and central horizontal angle variables into a first 1-dimensional cost function for the central horizontal angle variables; and
estimating the central horizontal angle of the distributed signal source making the first 1-dimensional cost function have a maximum.

13. The method of claim 12, wherein the step for converting the 2-dimensional cost function into the first 1-dimensional cost function inputs the primary central vertical angle into the 2-dimensional cost function for the central vertical angle variables and central horizontal angle variables as a value of the central vertical angle variable.

14. The method of claim 8, wherein the step for estimating the central vertical angle of the distributed signal source comprises the steps of:

converting a 2-dimensional cost function for central vertical angle variables and central horizontal angle variables into a second 1-dimensional cost function for the central vertical angle variables; and
estimating the central vertical angle of the distributed signal source making the second 1-dimensional cost function have a maximum.

15. The method of claim 14, wherein the step for converting the 2-dimensional cost function into the second 1-dimensional cost function inputs the estimated central horizontal angle into the 2-dimensional cost function for the central vertical angle variables and central horizontal angle variables as a value of the central horizontal angle variables.

# FIG. 1

# FIG. 2

$$(\hat{\theta}_i, \hat{\phi}_i), i=1,2,\ldots,q$$

2-D SEARCHING UNIT

CONTROL UNIT

# FIG. 3

# FIG. 4

# FIG. 5

100

110

$\tilde{\theta}_i, i=1,2,\ldots,q$

120

PREPROCESSING UNIT → CENTRAL HORIZONTAL ANGLE SEARCHING UNIT

$\hat{\phi}_i, i=1,2,\ldots,q$

CONTROL UNIT ← CENTRAL VERTICAL ANGLE SEARCHING UNIT

$\hat{\theta}_i, i=1,2,\ldots,q$

140

130

# FIG. 6

START

S20 — ESTIMATE PRIMARY CENTRAL VERTICAL ANGLES OF DISTRIBUTED SIGNAL SOURCES RECEIVED BY PAIR OF CIRCULAR ARRAY ANTENNAS

S22 — ESTIMATE CENTRAL HORIZONTAL ANGLE OF DISTRIBUTED SIGNAL SOURCE BY ONE-DIMENSIONAL SEARCHING

S24 — ESTIMATE CENTRAL VERTICAL ANGLE OF DISTRIBUTED SIGNAL SOURCE BY ONE-DIMENSIONAL SEARCHING

S26 — FINISH ESTIMATION OF SIGNAL ARRIVAL DIRECTIONS OF ALL SIGNAL SOURCES?

NO

YES

END